# EUROPEAN PATENT APPLICATION

(11) **EP 4 815 427 A1**
(43) Date of publication of application: **30.09.2026**
(21) Application number: 25185759.5
(22) Date of filing: 27.06.2025
(51) Int. Cl.: H04N 1/54, H04N 1/62

(54) **INFORMATION PROCESSING SYSTEM, PROGRAM, AND INFORMATION PROCESSING METHOD**

(30) Priority: 26.03.2025 JP 2025050924
(71) Applicant: FUJIFILM Business Innovation Corp., Minato-ku Tokyo (JP)
(72) Inventor: HORIUCHI, Misaki, Yokohama-shi, Kanagawa (JP); YOKOHASHI, Mami, Yokohama-shi, Kanagawa (JP); IWAFUCHI, Toshihiro, Yokohama-shi, Kanagawa (JP)
(74) Representative: Becker Kurig & Partner Patentanwälte mbB

(57) **Abstract**

An information processing system includes a processor configured to: acquire first information that defines an output color value corresponding to an input color value for each grid point of the input color value; generate second information by smoothing the output color value of each grid point in the first information by using the output color values of one or more grid points in the vicinity of the grid point; and in the generation of the second information, maintain, for a first grid point where a value of a specific color component in the output color value is equal to or less than a threshold value, the value of the specific color component at the first grid point to be equal to or less than the threshold value.

## Description

### BACKGROUND OF THE INVENTION

### (i) Field of the Invention

The present invention relates to an information processing system, a program, and an information processing method.

### (ii) Description of Related Art

In order to improve printing quality, such as improving particle properties or expanding color gamut, one or more special color inks are used in addition to four primary colors that are process colors, that is, C (cyan), M (magenta), Y (yellow), and K (black). The special color inks include, for example, fluorescent pink ink and fluorescent green ink.

For example, in a printing system using one special color N, in order to reproduce vivid colors that can be reproduced on a monitor, it is necessary to accurately separate an RGB original into data of CMYK + N values. Here, the CMYK+N values are vector values in a five-dimensional space consisting of the densities of five colors of C, M, Y, K, and N. As a calculation method for performing this separation with high accuracy, a method of calculating the values of a K plate and an N plate and then addressing the values of the remaining C, M, and Y plates is general. Several color separation methods are known for this calculation method.

As a specific color separation method, there is a method of dividing a color gamut into a plurality of regions and limiting each region to only several colors dominant in each region to predict printing colors, which reproduce the values of the original, at high speed. Hereinafter, the method will be referred to as a division method. In the division method, the values of the K plate and a special color plate are calculated independently in each of the divided regions. JP2007-194745A discloses an example of separation processing using a division method.

As another method of the color separation, there is a method of calculating the K plate and the special color plate before the calculation of CMY plates, fixing the values of the K plate and the special color plate obtained by the calculation, and calculating the values of the remaining CMY plates. Hereinafter, this method will be referred to as a direct method. JP2011-010083A discloses an example of the separation processing by the direct method.

However, in the division method, a gradation jump occurs between the divided regions. In addition, in the direct method, the gradation jump occurs in the CMY plates.

In order to reduce such a gradation jump, a method of linking a smoothing function to the color separation has been proposed. The smoothing is also referred to smoothing. Related arts using the smoothing include related arts disclosed in JP2003-116012A, JP2020-120318A, and JP2022-178424A.

In a method disclosed in JP2003-116012A, a second lookup table is created by selecting and using second grid point data in a case where the amount of change of chromaticity between first grid point data of a first lookup table in which grid point data is stored as an output color signal in correspondence with a grid point defined by an input color signal and second grid point data after smoothing obtained by smoothing the first grid point data of the first lookup table is within a defined allowable range, and by selecting and using the first grid point data in a case where the amount of change of the chromaticity is not within the defined allowable range. That is, in this method, the value after smoothing is adopted in a case where the value after smoothing is close to an original value, and the original value is adopted in a case where the value after smoothing is far from the original value.

In addition, in a method disclosed in JP2020-120318A, in order to improve gradation properties, the color of each grid point indicated by a color separation table is smoothed for all color components.

In addition, in a method disclosed in JP2022-178424A, the special color component and the K component are smoothed, and the values of the remaining color components are calculated using the results of the smoothing.

### SUMMARY OF THE INVENTION

In the processing of converting an input color value into an output color value, there is a case where a value of a specific color component of the output color value is desired to be set to 0. For example, in the case of a fluorescent toner, color reproduction changes depending on the presence or absence of ultraviolet light in lighting. Therefore, in a case where a component of the fluorescent toner is included in the output color value representing gray, the appearance of color changes noticeably in a case where the lighting is changed. In order to avoid such a change in appearance, the value of the component of the fluorescent toner needs to be set to 0 in the output color value corresponding to gray.

Here, in the process of generating information for converting the input color value into the output color value, the output color value of the first grid point where the specific color component of the output color value is 0 is smoothed using the output color value of a grid point in the vicinity of the first grid point. In this case, among the nearby grid points, there may be a grid point in which the value of the specific color component of the output color value is not 0 (that is, the value is a positive value). Therefore, in a case where the smoothing of the output color value of the first grid point is performed by a simple method, the value of the specific color component of the output color value of the first grid point in the smoothing result may not be 0 due to the influence of the value of the specific color component of the grid point in the vicinity of the first grid point.

In a case where the smoothing is performed as described above, the value of the specific color component of the output color value of the first grid point may not be 0, the above-described problem such as the change in the appearance of the color may occur.

Even in a case where the value of the specific color component is not completely 0, the same problem may occur in a case where the value is very small (that is, equal to or less than a predetermined small threshold value). That is, in a case where the value of a very small specific color component becomes a relatively large value by smoothing, a change in appearance color may be noticeable.

Aspects of non-limiting embodiments of the present disclosure relate to a system that can suppress a change in the appearance of color, compared to where smoothing is performed without considering a value of a specific color component in an output color value.

According to a first aspect of the present disclosure, there is provided an information processing system comprising: a processor configured to: acquire first information that defines an output color value corresponding to an input color value for each grid point of the input color value; generate second information by smoothing the output color value of each grid point in the first information by using the output color values of one or more grid points in the vicinity of the grid point; and in the generation of the second information, maintain, for a first grid point where a value of a specific color component in the output color value is equal to or less than a threshold value, the value of the specific color component at the first grid point to be equal to or less than the threshold value.

According to a second aspect of the present disclosure, there is provided the information processing system according to the first aspect, in which the value of the specific color component may be 0 in a case where the value of the specific color component is equal to or less than the threshold value.

According to a third aspect of the present disclosure, there is provided the information processing system according to the first aspect, in which the specific color component may be a complementary region.

According to a fourth aspect of the present disclosure, there is provided the information processing system according to the first aspect, in which the output color value may include one or more process color components and a special color component, and the specific color component may be the special color component.

According to a fifth aspect of the present disclosure, in the information processing system according to the first aspect, in which in the generation of the second information, the value of the specific color component at the first grid point may be maintained to be equal to or less than the threshold value by excluding the specific color component from a smoothing target in a case where the output color value of the first grid point is smoothed.

According to a sixth aspect of the present disclosure, in the information processing system according to the first aspect, in which in the generation of the second information, the value of the specific color component at the first grid point may be maintained to be equal to or less than the threshold value by not using the output color value of the grid point, in which the specific color component of the output color value is not equal to or less than the threshold value, among one or more grid points in the vicinity of the first grid point in a case where the output color value of the first grid point is smoothed.

According to a seventh aspect of the present disclosure, there is provided the information processing system according to the first aspect, in which the processor may be configured to: set a value of the specific color component of the output color value of a second grid point adjacent to the first grid point in the second information to a value smaller than an average value of values of the specific color components of the second grid point and each grid point in the vicinity of the second grid point.

According to an eighth aspect of the present disclosure, in the information processing system according to the first aspect, in which in the generation of the second information, in a case where the output color value of a second grid point adjacent to the first grid point is smoothed, smoothing may be performed on a grid point adjacent to the grid point where a value of the specific color component of the output color value is equal to or less than the threshold value among one or more grid points in the vicinity of the second grid point, assuming that the specific color component of the output color value is equal to or less than the threshold value, thereby setting the value of the specific color component of the output color value of the second grid point to a value smaller than an average value of values of the specific color components of the second grid point and each grid point in the vicinity of the second grid point.

According to a ninth aspect of the present disclosure, there is provided a program for causing a computer to execute a process comprising: acquiring first information that defines an output color value corresponding to an input color value for each grid point of the input color value; generating second information by smoothing the output color value of each grid point in the first information by using the output color values of one or more grid points in the vicinity of the grid point; and in the generation of the second information, maintaining, for a first grid point where a value of a specific color component in the output color value is equal to or less than a threshold value, the value of the specific color component at the first grid point to be equal to or less than the threshold value.

According to a tenth aspect of the present disclosure, there is provided an information processing method comprising: acquiring first information that defines an output color value corresponding to an input color value for each grid point of the input color value; generating second information by smoothing the output color value of each grid point in the first information by using the output color values of one or more grid points in the vicinity of the grid point; and in the generation of the second information, maintaining, for a first grid point where a value of a specific color component in the output color value is equal to or less than a threshold value, the value of the specific color component at the first grid point to be equal to or less than the threshold value.

According to the first aspect to the third aspect, the ninth aspect, or the tenth aspect of the present invention, it is possible to suppress a change in the appearance of color, compared to where smoothing is performed without considering the value of the specific color component in the output color value.

According to the fourth aspect of the present invention, it is possible to suppress a change in the appearance of color, compared to where smoothing is performed without considering the value of a special color.

According to the fifth aspect of the present invention, for example, a change in the appearance of color due to the smoothing can be suppressed for a grid point corresponding to a complementary region or a skin color region of the specific color component.

According to the sixth aspect of the present invention, for example, a change in the appearance of color due to the smoothing can be suppressed for a grid point corresponding to a gray region.

According to the seventh aspect or the eighth aspect of the present invention, it is possible to reduce a difference in the specific color component between the first grid point and the second grid point compared to where the average value of the grid points around the second grid point is obtained in the smoothing of the second grid point adjacent to the first grid point where the value of the specific color component is equal to or less than the threshold value.

### BRIEF DESCRIPTION OF THE DRAWINGS

Exemplary embodiment(s) of the present invention will be described in detail based on the following figures, wherein:
Fig. 1 is a diagram showing a part of a grid point group in a color conversion profile for describing a problem of smoothing in the related art;
Fig. 2 is a diagram showing a change in a correspondence relationship between the amount of a special color P and an a* value before and after the smoothing in the smoothing problem of the related art;
Fig. 3 is a diagram showing an example of a hardware configuration of a computer;
Fig. 4 is a diagram illustrating a processing procedure in the related art for generating a color conversion profile;
Fig. 5 is a diagram illustrating a processing procedure of the present exemplary embodiment for generating a color conversion profile;
Fig. 6 is a diagram for describing a method of setting a smoothing coefficient;
Fig. 7 is a diagram for describing another method of setting the smoothing coefficient;
Fig. 8 is a diagram for describing a problem in a case where a grid point adjacent to a grid point having a special color component of 0 is smoothed; and
Fig. 9 is a diagram illustrating a processing procedure of a modification example.

### DETAILED DESCRIPTION OF THE INVENTION

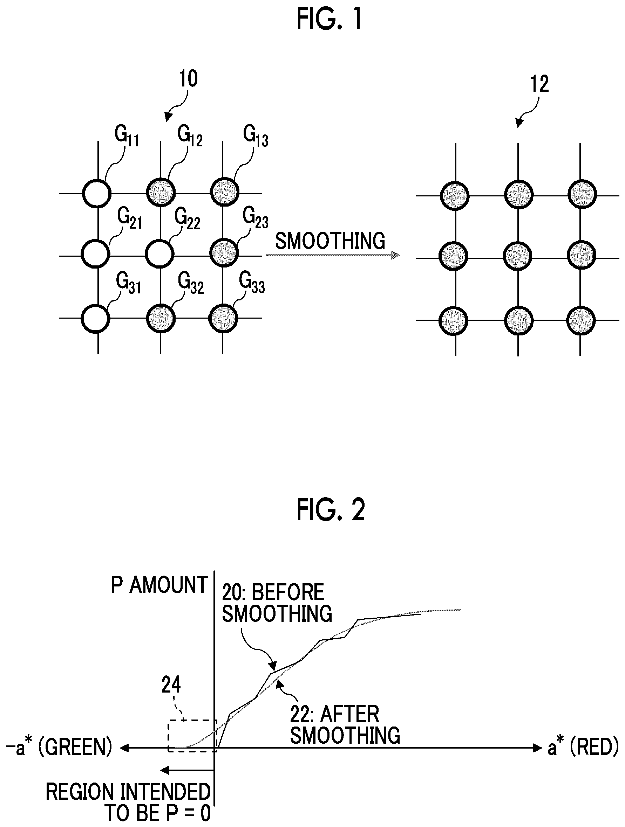

First, problems in the related art to be addressed by the method of an exemplary embodiment described below will be described with reference to Figs. 1 and 2.

Fig. 1 shows a part of a grid point (also referred to as a grid) group in a color conversion profile. A grid point group 10 before smoothing shown in Fig. 1 includes nine grid points G₁₁, G₁₂, G₁₃, G₂₁, G₂₂, G₂₃, G₃₁, G₃₂, and G₃₃ in three rows and three columns. Among the nine grid points, special color components of output color values of the four grid points G₁₁, G₂₁, G₂₂, and G₃₁ are 0, and special color components of output color values of the remaining five grid points G₁₂, G₁₃, G₂₃, G₃₂, and G₃₃ are not 0 (that is, positive values). It is assumed that simple smoothing is performed on the grid point group 10. In this case, for example, the grid point G₂₂ in which the special color component of the output color value is 0 before smoothing is performed has the special color component of the output color value that is not 0 as a result of the smoothing due to the influence of the grid points G₁₂, G₁₃, G₂₃, G₃₂, and G₃₃ of which the special color components are not 0 around the grid point G₂₂. Similarly, since the grid points G₁₁, G₂₁, and G₃₁ also have grid points of which the special color components are not 0 therearound, the special color components of the output color values thereof have values that are not 0 due to the smoothing. As described above, for all the grid points of the grid point group 12 after smoothing, the special color components of the output color values have values that are not 0. Here, an example in which eight grid points adjacent to a grid point to be targeted are used as the grid points "around" used for the smoothing is shown, but this is merely exemplary. The range of the "around is not limited to the adjacent range, and any range used for the smoothing in the related art may be adopted.

Hereinafter, as an example, a case where a certain special color P (that is, pink) is used will be described as an example. However, the following description is also appropriate in a case where special colors other than P are used.

Fig. 2 shows a change in a gray scale image before and after smoothing. This figure shows a correspondence relationship between an a* value and the amount of a special color P in the L*a*b* color space of the CIE (that is, the International Commission on Illumination). Since the special color P adds redness (that is, a color tint corresponding to a positive value of a*), basically, the larger the P amount, the higher the a* value. However, since the a* value is also related to the component of a process color, the two are not in a simple monotonically increasing relationship. In a change pattern 20 of the P amount with respect to the a* value before smoothing, a steep gradation change may be observed in consideration of the component of the process color, rather than a smooth gradation change.

In contrast, a change pattern 22 after smoothing is a smooth curve with no roughness. However, in the change pattern 22 after smoothing, as a side effect, a portion where the P amount is positive appears in a region where the a* value is 0 or less (that is, a region of gray or a complementary of a*). Since the region where the a* value is original 0 or less is a region where redness should not be present, in a case where the P amount is not 0 (that is, is a positive value) in this region, a difference in color between an input color and an output color is very noticeable. The P amount here may include some errors. The P amount within the range of the error (in other words, equal to or less than a predetermined threshold value) may be regarded as 0, and the P amount that is larger than the error range may be regarded as a P amount that is not 0. In the following, a case where the value of P can be regarded as 0 within the error range will be expressed as "the value of P is substantially 0" or simply "the value of P is 0".

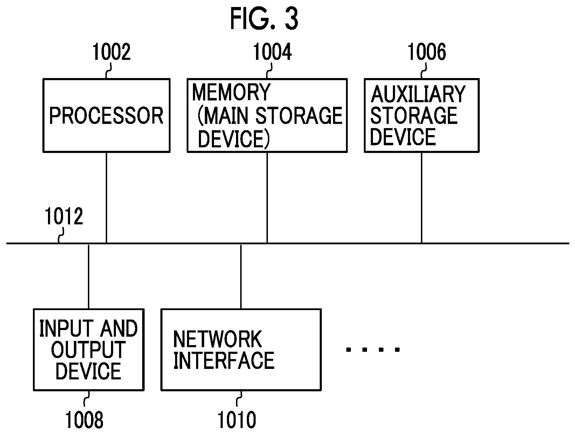

An information processing system shown in this exemplary embodiment addresses such a problem. The information processing system is configured by using, for example, one or a plurality of computers. Fig. 3 shows an example of a hardware configuration of the computer. The shown computer has a circuit configuration in which a processor 1002, a memory (main storage device) 1004, such as a random access memory (RAM), a controller that controls an auxiliary storage device 1006, which is a non-volatile storage device, such as a flash memory, a solid state drive (SSD), or a hard disk drive (HDD), an interface with various input and output devices 1008, a network interface 1010 that performs control for connection to a network, such as a local area network, and the like are connected via a data transmission path such as a bus 1012. For example, a program describing the processing of the present exemplary embodiment is installed in the computer and is stored in the auxiliary storage device 1006. The information processing system shown in this disclosure is realized by the program stored in the auxiliary storage device 1006 being executed by the processor 1002 by using the memory 1004.

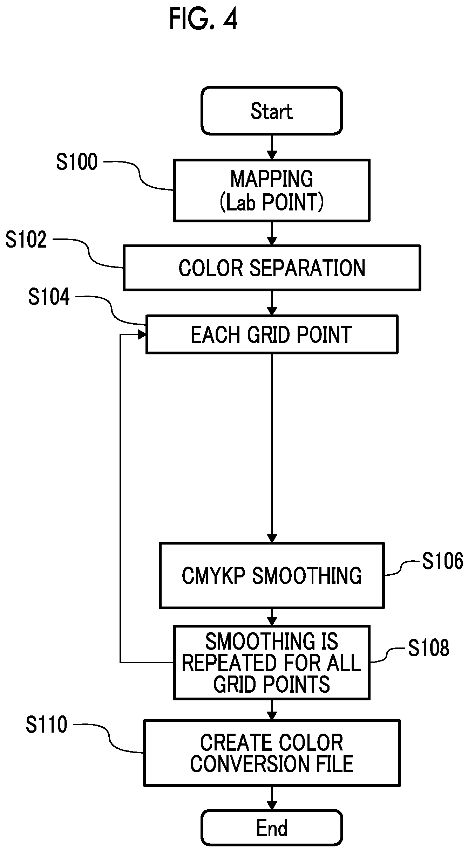

In the present exemplary embodiment, the information processing system creates a color conversion profile for performing color conversion from a color space of an input image to a color space of an output image. In the creation of the color conversion profile, measures for preventing or suppressing inappropriate mixing of a special color (for example, P) due to smoothing are taken. Before describing the method of the exemplary embodiment, creation processing for creating a color conversion profile in the related art in which such measures are not taken will be described with reference to Fig. 4 as a comparative example.

A processor (not shown) that executes the procedure of Fig. 4 first maps the color of the input image to a color in an output device (S100). For example, it is assumed that the color space of the input image is RGB and the color space of the output device (for example, a printer) is CMYKP including the special color P. In this case, the color of the input image is converted to a color expression in a device-independent color space, here, for example, CIE L*a*b*, by a profile indicating the color characteristics of the device that has generated the input image. Here, since the color gamut capable of being expressed by the output device is different from the color gamut of the input device, an L*a*b* value representing the color of the input image may not be within the expressible range of the output device. Therefore, it is necessary to convert the L*a*b* value representing the color of the input image into the L*a*b* value representing the color well within the expressible range of the output device by performing processing such as color gamut compression or the like. This is mapping processing. By the mapping processing, the L*a*b* value for the output device corresponding to the input color value (in this example, the RGB value) of a grid point is obtained as a mapping result for each grid point set in the color space of the input image.

Next, the processor converts the L*a*b* value of the mapping result into a CMYKP value of the output device using a color separation algorithm such as a division method or a direct method (S102). Accordingly, the output color value corresponding to the input color value of the grid point, that is, in this example, the CMYKP value is obtained for each grid point.

Next, the processor selects one grid point that has not been processed yet (S104). The grid point selected in this step is referred to as a target grid point. The processor 1002 executes simple smoothing on the CMYKP value of the target grid point (S106). The simple smoothing referred to here is smoothing processing in the related art. For example, the CMYKP value of the grid point is obtained by averaging the value of each CMYKP component of the target grid point and the value of each of CMYKP components of the grid points for each component around the target grid point. The obtained CMYKP value is a final output color value corresponding to the target grid point. The smoothing (S106) is repeated for all grid points (S108).

In a case where the smoothing for all the grid points is completed, the processor creates a color conversion profile (S110). The color conversion profile to be created is data representing a correspondence relationship between an input color value (in this example, an RGB value) corresponding to each grid point and a smoothed output color value (in this example, a CMYKP value).

As described above, in such simple smoothing, like gray or a complementary of the special color P, the value of a P component of a grid point, which should originally be 0, becomes a positive value that is not 0.

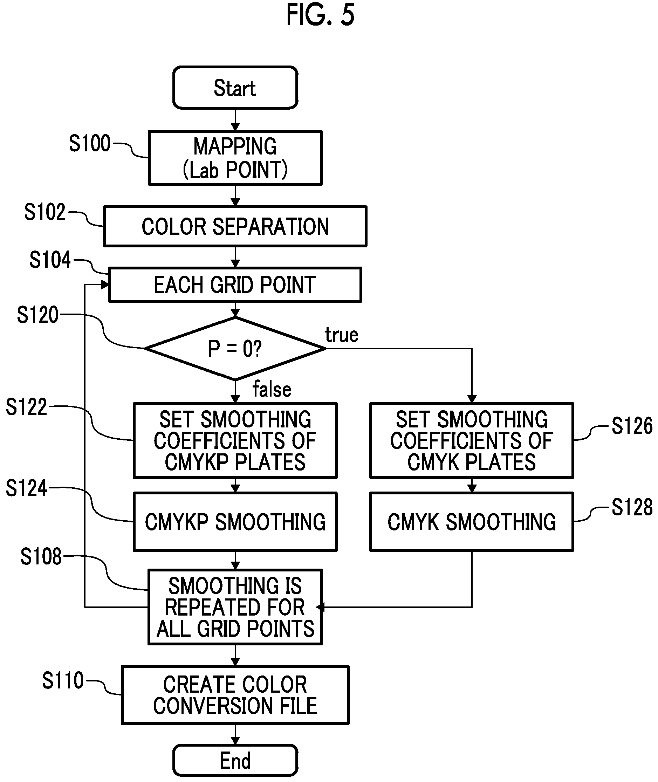

A processing procedure of the present exemplary embodiment for addressing such a problem is shown in Fig. 5. In Fig. 5, the steps and the processing contents having the same steps as the steps shown in Fig. 4 are denoted by the identical reference numerals, and the description thereof will be omitted.

In the procedure of Fig. 5, in a case where a grid point is selected in step S104, the processor 1002 of the information processing system of the present exemplary embodiment determines whether or not the value of the P component among the output color values of the grid point is 0, that is, whether or not P = 0 is established (S120). In one example, in step S120, a determination is made whether or not the value of P is strictly 0. However, this is merely an example. In another example, in step S120, a determination is made that P is 0 in a case where P is equal to or less than a predetermined threshold value corresponding to the error range, and a determination is made that P is not 0 in a case where P is larger than the threshold value.

In a case where a determination is made in step S120 that P ≠ 0 (that is, the determination result is false), the processor 1002 sets the smoothing coefficient of each of CMYKP plates (S122). The smoothing coefficient is a weight assigned to the color values of the target grid point and each of the grid points around the target grid point. In calculating the smoothing, the color values of the target grid point and each of the grid points around the target grid point are weighted with the corresponding smoothing coefficients and then averaged to obtain the color value of the target grid point after smoothing. In this example, the smoothing coefficient of each of the CMYKP plates may have the same value as in the case of the smoothing processing in the related art. For example, in a case where smoothing is performed by simple averaging, the weights, that is, the smoothing coefficients of the target grid point and each of the grid points around the target grid point may be set to the same value. Next, the processor 1002 executes the smoothing of the color value of each of the CMYKP plates for the target grid point by using the smoothing coefficients set in step S122 (S124).

In a case where a determination is made in step S120 that P = 0 (that is, the determination result is true), the processor 1002 sets the smoothing coefficient of each of the CMYK plates (S126). In a case where P = 0, a P plate is excluded from the smoothing target. Thus, the smoothing coefficient is not set for the P plate. The smoothing coefficient of each plate (that is, CMYK) other than P may be set to, for example, the same value as in the case of the smoothing processing in the related art. Next, the processor 1002 executes the smoothing of the color value of each of the CMYK plates for the target grid point by using the smoothing coefficients set in step S126 (S128). Since the value of P is not a smoothing target, the value of P is maintained as the original value.

The processing of steps S120 to S128 described above is repeated for all the grid points (S108), and the color conversion profile is created (S110).

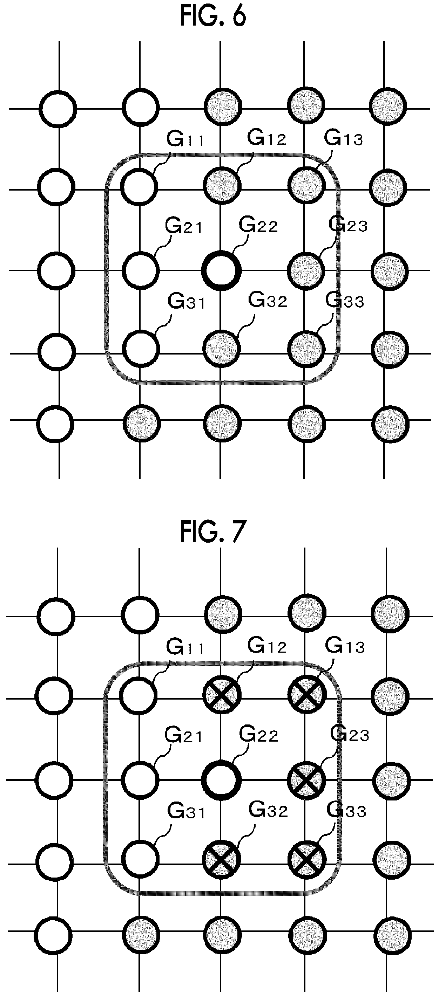

The process shown in Fig. 5 has two variations depending on a method of setting the smoothing coefficients in step S126. These two variations will be described with reference to Figs. 6 and 7.

In Figs. 6 and 7, the target grid point G₂₂ and eight grid points around the target grid point G₂₂ are shown as in Fig. 1. Among the nine grid points, the four grid points G₁₁, G₂₁, G₂₂, and G₃₁ have the P component of 0, and the remaining five grid points G₁₂, G₁₃, G₂₃, G₃₂, and G₃₃ have the P component other than 0. In these figures, the grid points having the P component of 0 are represented by white circles, and the grid points having the P component other than 0 are represented by gray-filled circles.

In the example of Fig. 6, the P plate is excluded from the smoothing target, and the smoothing (for example, simple averaging) according to the related art is performed by using the color values of the nine grid points for each of the CMYK plates. This smoothing method will be referred to as a first method. That is, in a case where the smoothing by the simple averaging is assumed as the related art, in the first method, in step S126, for example, the smoothing coefficient of each of the CMYK plates assigned to the nine grid points is set to the same positive value. Therefore, in the calculation of the smoothing of the target grid point G₂₂, the average of the values of a relevant plate at the nine grid points is calculated for any plate of CMYK. On the other hand, since the P plate is excluded from the smoothing target, the value of the P component of the output color value of the target grid point G₂₂ is equal before and after smoothing. Therefore, the value of the P component of the target grid point G₂₂ after smoothing remains 0, which is the same as the value before the smoothing. As described above, in the example of Fig. 6, as a result of the smoothing, the value of each component of CMYK of the target grid point G₂₂ is an average of the values of the components of the nine grid points including the target grid point G₂₂, and the value of the P component of the target grid point G₂₂ is maintained at 0.

In the example of Fig. 7, among the eight grid points around the target grid point G₂₂, the five grid points G₁₂, G₁₃, G₂₃, G₃₂, and G₃₃ having the value of the P component that is not 0 are not used for the calculation of the smoothing.

Therefore, the smoothing of the CMYK components of the target grid point G₂₂ is calculated by the average of the components of the four grid points G₁₁, G₂₁, G₂₂, and G₃₁ having the P component of 0. This smoothing method will be referred to as a second method. The second method is realized by, for example, setting the smoothing coefficients of the five grid points G₁₂, G₁₃, G₂₃, G₃₂, and G₃₃ having P ≠ 0 in step S126 to 0 and by setting the four grid points G₁₁, G₂₁, G₂₂, and G₃₁ having P = 0 to, for example, the same predetermined positive value.

**In** any case, according to the procedure of Fig. 5, in a case where the P component of the target grid point G₂₃ is substantially 0, in the smoothing, the value of the P component is maintained as the original value that is substantially 0. Accordingly, the grid points where the P component is substantially 0 are prevented or suppressed from being colored by the P component due to the smoothing.

In addition, whether to use the first method or the second method may be determined depending on the characteristics of the output color value of the target grid point G₂₂.

In one example, in a case where the output color value of the target grid point G₂₂ indicates a color in a gray region, the processor 1002 performs smoothing by the second method. That is, in this case, the five grid points G₁₂, G₁₃, G₂₃, G₃₂, and G₃₃ having P ≠ 0 are not used for smoothing each of the CMYK components of the target grid point G₂₂. The value of each of the CMYK components of the target grid point G₂₂ after smoothing is calculated as an average of the values of the components of the four grid points G₁₁, G₂₁, G₂₂, and G₃₁ having P = 0. Accordingly, the possibility that the color of the target grid point G₂₂ deviates from the gray region due to the smoothing is reduced.

In another example, in a case where the output color value of the target grid point G₂₂ corresponds to the color of a complementary region of the special color P, the processor 1002 performs smoothing by the first method. The complementary region of the special color P is a region of a color having P = 0 and not being a gray region in the CMYKP color space. In this case, the smoothing value of each of the CMYK components of the target grid point G₂₂ is calculated as an average of the values of the components of the nine grid points G₁₁, G₁₂, G₁₃, G₂₁, G₂₂, G₂₃, G₃₁, G₃₂, and G₃₃. In addition, the special color P is excluded from the smoothing target. In a case where the special color P is also a smoothing target, the P component enters the target grid point G₂₂ in the complementary region by the smoothing (that is, P is not 0). Thus, there is a possibility that moire may occur. In contrast, in a case where the special color P is excluded from the smoothing target, the possibility of causing moire is reduced.

In still another example, a case where the output color value of the target grid point G₂₂ corresponds to the color of a skin color region is considered. The skin color region is a region corresponding to a color of human skin in the CMYKP color space. The skin color region can be defined by, for example, a combination of a range of values taken by each of the CMYKP plates. Some of the grid points in the skin color region have P = 0, while other grid points do not have P = 0. Since the skin color does not have a high chroma, some of the grid points corresponding to the skin color may not use the special color P (that is, pink). In a case where the target grid point G₂₂ is in the skin color region and P = 0, the processor 1002 performs smoothing by the first method. That is, in this case, the smoothing value of each of the CMYK components of the target grid point G₂₂ is calculated as an average of the values of the components of the nine grid points G₁₁, G₁₂, G₁₃, G₂₁, G₂₂, G₂₃, G₃₁, G₃₂, and G₃₃. In addition, the special color P is excluded from the smoothing target. In a case where the special color P is also a smoothing target, the value of P of the target grid point G₂₂ having P = 0 in the skin color region is not 0 due to the smoothing. Thus, a rapid gradation jump occurs in the P plate. In contrast, in a case where the special color P is excluded from the smoothing target, a rapid gradation jump is suppressed.

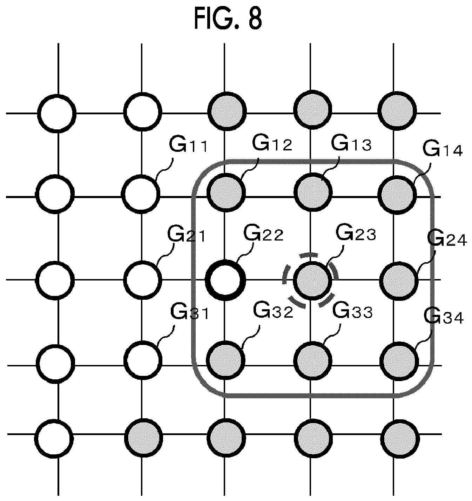

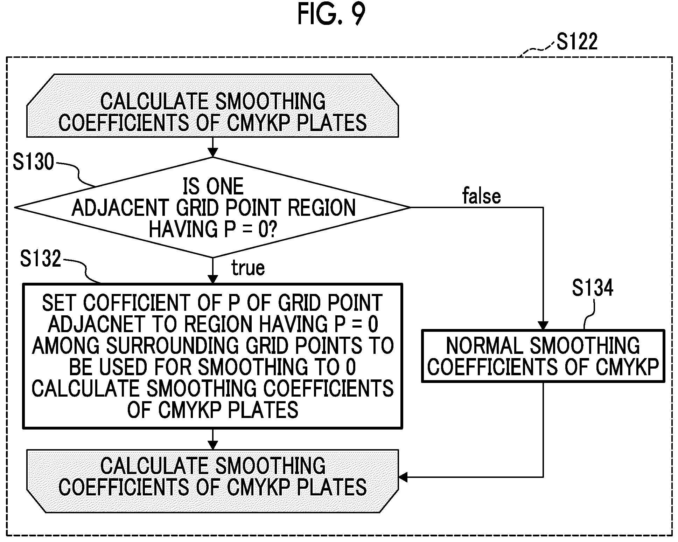

Next, a modification example will be described with reference to Figs. 8 and 9.

First, Fig. 8 will be referred to. In a case where the smoothing is performed by the method described above, the value of P of the grid point G₂₂ having P = 0 is maintained at 0 even after the smoothing. On the other hand, the same smoothing as in the related art is performed on the grid point G₂₃ having P ≠ 0 adjacent to the right of the grid point G₂₂ (S122 and S124). Here, seven among the eight grid points around the grid point G₂₃ have P≠0. Thus, in a case where the same smoothing as in the related art is performed, there is a high possibility that the value of the P component of the grid point G₂₃ after smoothing is a relatively large value. Therefore, as a result of the smoothing, the gradation jump of the P component in the smoothing result may be too large between the grid point G₂₂ of P = 0 and the grid point G₂₃ of P ≠ 0 adjacent to the grid point G₂₂. Therefore, in this modification example, the processing of reducing such a gradation jump is proposed.

That is, in this modification example, the smoothing result of the P component of a second grid point having P ≠ 0 adjacent to a first grid point having P = 0 is set to be a value smaller than a value obtained by normal smoothing, that is, an average of the P components of surrounding grid points. An example of the processing for this is shown in Fig. 9. In this modification example, step S122 of the procedure of Fig. 5 is set as the processing contents shown in Fig. 9. Therefore, the procedure shown in Fig. 9 is executed in a case where the value of the P component of the target grid point selected in step S104 is not 0.

In the procedure of Fig. 9, the processor 1002 determines whether or not one grid point adjacent to the target grid point is a grid point of P = 0 (S130). In a case where the result of the determination is false, the processor 1002 sets the smoothing coefficient for each of the CMKYP components to a normal value, that is, the same value as being set by the method in the related art (S134).

On the other hand, in a case where the determination result of step S130 is true, the processor 1002 sets the smoothing coefficient for P of the grid point adjacent to the grid point having P = 0 among the eight grid points around the target grid point to 0 (S132). The smoothing coefficient for each component other than P of the grid point adjacent to the grid point having P = 0 among the eight grid points around the target grid point may be set to a normal value. In addition, for the grid points that are not adjacent to the grid point having P = 0 among the eight grid points around the target grid point, the smoothing coefficient for each of the CMYKP components may be set to the same value as the normal value.

For example, in the example of Fig. 8, in a case where the grid point G₂₃ is set as the target grid point, nine grid points consisting of the target grid point G₂₃ and the eight grid points G₁₂, G₁₃, G₁₄, G₂₂, G₂₄, G₃₂, G₃₃, and G₃₄ around the target grid point G₂₃ are used for smoothing the target grid point G₂₃. Since the target grid point G₂₃ has the P component that is not 0, the procedure of Fig. 9 is executed. Since the grid point G₂₂ having P = 0 is adjacent to the target grid point G₂₃, the determination result in step S130 is true, and step S132 is executed. Here, among the eight grid points around the target grid point, the grid points G₁₂ and G₃₂ are adjacent to the grid point G₂₂ and the like having P = 0, the grid point G₂₂ is adjacent to the grid point G₂₁ and the like having P = 0, and the other five grid points are not adjacent to the grid point having P = 0. Therefore, in step S132, the smoothing coefficient for P of the grid points G₁₂, G₂₂, and G₃₂ is set to 0, and the smoothing coefficient for P of the remaining six grid points G₁₃, G₁₄, G₂₄, G₃₃, and G₃₄ is set to a normal value. The smoothing coefficient for each of the CMYK components is also set to a normal value for the above nine grid points used for smoothing.

By using such a setting method, the value of the P component after smoothing of grid points having P ≠ 0 adjacent to a grid point having P = 0 is smaller than a value in a case where the smoothing coefficient according to the related art is used. In the example of Fig. 8, the smoothing coefficient for P of the grid points G₁₂ and G₃₂ is 0 in the calculation of the P component after smoothing of the grid point G₂₃. In contrast, in a case where the method according to the related art is used, the smoothing coefficient for P of the grid points G₁₂ and G₃₂ is the same as the smoothing coefficient for the other grid points G₁₃, G₁₄, G₂₄, G₃₃, and G₃₄, and is a value larger than 0. Therefore, by using the procedure of Fig. 9, the value of the P component of the grid point G₂₃ after smoothing is smaller than a value in a case where the method in the related art is used. Accordingly, the gradation jump of the P component between the grid point G₂₃ and the grid point G₂₂ having P = 0 is smaller than a gradation jump in a case where the method of this modification example is not used.

Although the exemplary embodiment and the modification example have been described above, these are merely exemplary. In the above description, the procedure (see Fig. 5) of creating a new color conversion profile from scratch has been described as an example. However, the processing (particularly, the processing of steps S120 to S128) of the present exemplary embodiment can also be applied to a case where an existing color conversion profile is adjusted to create a new profile.

The processing of the present exemplary embodiment and the modification example can be naturally applied to special colors other than P (pink).

Furthermore, the processing of the present exemplary embodiment and the modification example can also be applied to process colors (that is, CMYK). In the color conversion profile, for example, in a case where smoothing is performed on the C plate, the value of a C component of a grid point having C = 0 before smoothing may be a positive value after smoothing and may be a relatively large value. In this case, for example, in a case where a Y component of the grid point is a relatively large value, the C component becomes a positive value after smoothing. Thus, the color of the grid point may turn greenish.

In order to address such a problem, for example, in the procedure of Fig. 5, the special color P may be replaced with the process color C. That is, in step S120, the C component of the grid point having C = 0 is excluded from the smoothing target (corresponding to steps S 126 and S128 in Fig. 5). The remaining process color components (for example, M and Y) of the grid points having C = 0 may be smoothed in a normal manner (the above-described first method, see Fig. 6), or may be smoothed using only a grid point having C = 0 among surrounding grid points (the above-described second method, see Fig. 7). In addition, the smoothing result of the C component of a second grid point having C≠0 adjacent to a first grid point having C=0 may be a value smaller than an average of the values of the C components of the surrounding grid points (this corresponds to the modification example of Fig. 9).

Although the process color C has been taken as an example above, the same applies to other process colors M and Y.

As described above, the method of the present exemplary embodiment or the modification example reduces the adverse effect of smoothing on a grid point having a specific color component, such as a special color component or a specific process color component, which is substantially 0, or grid points adjacent to the grid point.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

### (Supplementary Notes)

(((1))) An information processing system comprising:
   a processor configured to:
   acquire first information that defines an output color value corresponding to an input color value for each grid point of the input color value;
   generate second information by smoothing the output color value of each grid point in the first information by using the output color values of one or more grid points in the vicinity of the grid point; and
   in the generation of the second information, maintain, for a first grid point where a value of a specific color component in the output color value is equal to or less than a threshold value, the value of the specific color component at the first grid point to be equal to or less than the threshold value.
(((2))) The information processing system according to (((1))),
   wherein the value of the specific color component is 0 in a case where the value of the specific color component is equal to or less than the threshold value.
(((3))) The information processing system according to (((1))),
   wherein the specific color component is a complementary region.
(((4))) The information processing system according to (((1))),
   wherein the output color value includes one or more process color components and a special color component, and
   the specific color component is the special color component.
(((5))) The information processing system according to (((1))),
   wherein in the generation of the second information, the value of the specific color component at the first grid point is maintained to be equal to or less than the threshold value by excluding the specific color component from a smoothing target in a case where the output color value of the first grid point is smoothed.
(((6))) The information processing system according to (((1))),
   wherein in the generation of the second information, the value of the specific color component at the first grid point is maintained to be equal to or less than the threshold value by not using the output color value of the grid point, in which the specific color component of the output color value is not equal to or less than the threshold value, among one or more grid points in the vicinity of the first grid point in a case where the output color value of the first grid point is smoothed.
(((7))) The information processing system according to (((1))),
   wherein the processor is configured to:
   set a value of the specific color component of the output color value of a second grid point adjacent to the first grid point in the second information to a value smaller than an average value of values of the specific color components of the second grid point and each grid point in the vicinity of the second grid point.
(((8))) The information processing system according to (((1))),
   wherein, in the generation of the second information, in a case where the output color value of a second grid point adjacent to the first grid point is smoothed, smoothing is performed on a grid point adjacent to the grid point where a value of the specific color component of the output color value is equal to or less than the threshold value among one or more grid points in the vicinity of the second grid point, assuming that the specific color component of the output color value is equal to or less than the threshold value, thereby setting the value of the specific color component of the output color value of the second grid point to a value smaller than an average value of values of the specific color components of the second grid point and each grid point in the vicinity of the second grid point.
(((9))) A program for causing a computer to execute a process comprising:
   acquiring first information that defines an output color value corresponding to an input color value for each grid point of the input color value;
   generating second information by smoothing the output color value of each grid point in the first information by using the output color values of one or more grid points in the vicinity of the grid point; and
   in the generation the second information, maintaining, for a first grid point where a value of a specific color component in the output color value is equal to or less than a threshold value, the value of the specific color component at the first grid point to be equal to or less than the threshold value.

According to (((1))) to (((3))) or (((9))), it is possible to suppress a change in the appearance of color, compared to where smoothing is performed without considering the value of the specific color component in the output color value.

According to (((4))), it is possible to suppress a change in the appearance of color compared to where smoothing is performed without considering the value of a special color.

According to (((5))), for example, a change in the appearance of color due to the smoothing can be suppressed for a grid point corresponding to a complementary region or a skin color region of the specific color component.

According to (((6))), for example, a change in the appearance of color due to the smoothing can be suppressed for a grid point corresponding to a gray region.

According to (((7))) or (((8))), it is possible to reduce a difference in the specific color component between the first grid point and the second grid point compared to where the average value of the grid points around the second grid point is obtained in the smoothing of the second grid point adj acent to the first grid point where the value of the specific color component is equal to or less than the threshold value.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1002: processor
1004: memory
1006: auxiliary storage device
1008: input and output device
1010: network interface
1012: bus

## Claims

1. An information processing system comprising:
a processor configured to:
acquire first information that defines an output color value corresponding to an input color value for each grid point of the input color value;
generate second information by smoothing the output color value of each grid point in the first information by using the output color values of one or more grid points in the vicinity of the grid point; and
in the generation of the second information, maintain, for a first grid point where a value of a specific color component in the output color value is equal to or less than a threshold value, the value of the specific color component at the first grid point to be equal to or less than the threshold value.

2. The information processing system according to claim 1,
wherein the value of the specific color component is 0 in a case where the value of the specific color component is equal to or less than the threshold value.

3. The information processing system according to claim 1,
wherein the specific color component is a complementary region.

4. The information processing system according to claim 1,
wherein the output color value includes one or more process color components and a special color component, and
the specific color component is the special color component.

5. The information processing system according to claim 1,
wherein in the generation of the second information, the value of the specific color component at the first grid point is maintained to be equal to or less than the threshold value by excluding the specific color component from a smoothing target in a case where the output color value of the first grid point is smoothed.

6. The information processing system according to claim 1,
wherein in the generation of the second information, the value of the specific color component at the first grid point is maintained to be equal to or less than the threshold value by not using the output color value of the grid point, in which the specific color component of the output color value is not equal to or less than the threshold value, among one or more grid points in the vicinity of the first grid point in a case where the output color value of the first grid point is smoothed.

7. The information processing system according to claim 1,
wherein the processor is configured to:
set a value of the specific color component of the output color value of a second grid point adjacent to the first grid point in the second information to a value smaller than an average value of values of the specific color components of the second grid point and each grid point in the vicinity of the second grid point.

8. The information processing system according to claim 1,
wherein, in the generation of the second information, in a case where the output color value of a second grid point adjacent to the first grid point is smoothed, smoothing is performed on a grid point adjacent to the grid point where a value of the specific color component of the output color value is equal to or less than the threshold value among one or more grid points in the vicinity of the second grid point, assuming that the specific color component of the output color value is equal to or less than the threshold value, thereby setting the value of the specific color component of the output color value of the second grid point to a value smaller than an average value of values of the specific color components of the second grid point and each grid point in the vicinity of the second grid point.

9. A program for causing a computer to execute a process comprising:
acquiring first information that defines an output color value corresponding to an input color value for each grid point of the input color value;
generating second information by smoothing the output color value of each grid point in the first information by using the output color values of one or more grid points in the vicinity of the grid point; and
in the generation the second information, maintaining, for a first grid point where a value of a specific color component in the output color value is equal to or less than a threshold value, the value of the specific color component at the first grid point to be equal to or less than the threshold value.

10. An information processing method comprising:
acquiring first information that defines an output color value corresponding to an input color value for each grid point of the input color value;
generating second information by smoothing the output color value of each grid point in the first information by using the output color values of one or more grid points in the vicinity of the grid point; and
in the generation of the second information, maintaining, for a first grid point where a value of a specific color component in the output color value is equal to or less than a threshold value, the value of the specific color component at the first grid point to be equal to or less than the threshold value.
